# EUROPEAN PATENT APPLICATION

(11) **EP 1 309 197 A2**
(43) Date of publication of application: **07.05.2003**
(21) Application number: 02255934.8
(22) Date of filing: 27.08.2002
(51) Int. Cl.: H04N 7/24, H04N 5/445, H04N 5/50

(54) **Channel switching apparatus, channel switching method and channel switching program**

(30) Priority: 29.08.2001 JP 2001259955
(71) Applicant: Pioneer Corporation, Meguro-ku, Tokyo (JP)
(72) Inventor: Okajima, Takahiro, Pioneer Corporation, Tokorozawa-shi, Saitama (JP); Bessho, Manabu, Pioneer Corporation, Tokorozawa-shi, Saitama (JP); Komatsu, Kazuyoshi, Pioneer Corporation, Tokorozawa-shi, Saitama (JP); Tsunoi, Tomoaki, Pioneer Corporation, Tokorozawa-shi, Saitama (JP); Sakamoto, Shinichiro, Pioneer Corporation, Tokorozawa-shi, Saitama (JP); Hashimoto, Hiroaki, Pioneer Corporation, Tokorozawa-shi, Saitama (JP)
(74) Representative: Haley, Stephen

(57) **Abstract**

A television broadcast is received and the attributes of a program of content and a commercial are detected by a sound multiplex flag detection section 6. When attribute change from content to commercial is detected, a system controller 7 instructs a demultiplexing section 2 to switch the reception section to a different channel in the commercial time period. If attribute change from the commercial to the content is detected on the former channel after switching to the different channel, it is determined that the commercial time period end is reached, and the reception channel is restored to the former channel. When a predetermined time as the commercial time period elapses, it is determined that the commercial time period end is reached, and the reception channel is restored to the former channel.

## Description

This invention relates to a channel switching apparatus, a channel switching method, etc., for switching a reception channel of a television broadcast, etc., for example, and in particular to a channel switching apparatus, a channel switching method, etc., for switching the current reception channel to another channel during commercials.

For example, a television receiver in a related art is provided with a channel switching apparatus for switching a reception channel and the user, etc., can operate a channel set switch of a remote controller, thereby instructing the channel switching apparatus to receive any desired reception channel.

By the way, while the user, etc., views a broadcast program on one channel (namely, broadcasted content), commercials are broadcasted and the user, etc., might want to see a program on another channel during the broadcast time period of the commercials.

To do this, the user, etc., appropriately operates a channel set switch of the remote controller, thereby switching the channel and when it seems that the commercial broadcast terminates, the user, etc., switches the channel to the former channel for again viewing the program.

As a specific example, while the user, etc., views a "drama" program on one channel, if commercials of the sponsors of the program are broadcasted, the user, etc., may switch the channel to another channel for seeing the match or game progress of a "sports" program and when it seems that the commercial broadcast terminates, the user, etc., may switch the channel to the former channel for again viewing the "drama" program.

However, when the user, etc., performs channel switching according to the above-described operation procedure, it is difficult for the user, etc., to know the termination time point of the commercials and thus the user, etc., loses the appropriate timing for restoring to the program on the former channel and fails to see a part of the program on the former channel; this is a problem.

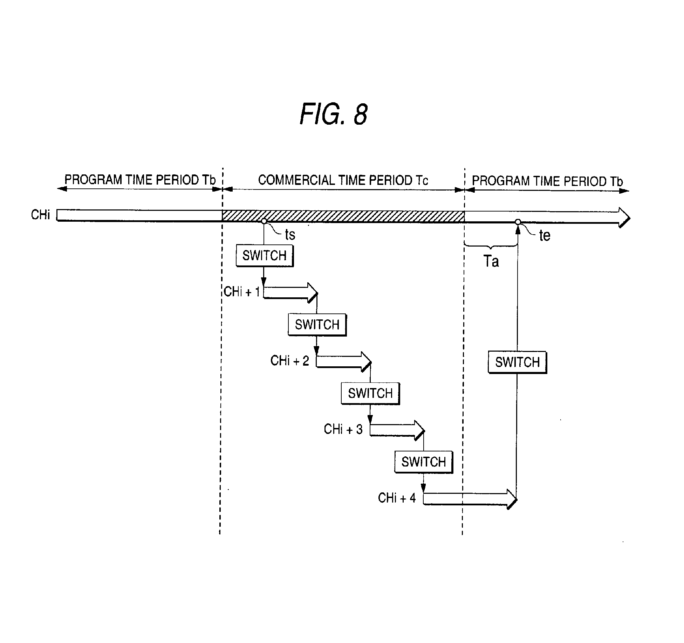

That is, as shown in a schematic time chart of FIG. 8, while the user, etc., views a program on one channel CHi, a commercial time period Tc comes and if the user, etc., switches the channel CHi to one or more different channels CHi+1 to CHi+4, etc., starting at one time point ts of the commercial time period Tc and switches to the former channel CHi at a time point te at which it seems that the commercial time period Tc ends, the channel switching time point te may make inroads into the former program time period Tb.

Thus, the user, etc., may fail to see a part of the program broadcasted in a time period Ta from the end of the commercial time period Tc to the channel switching time point te.

It is therefore an object of the invention to provide a channel switching apparatus and a channel switching method for performing channel switching in the commercial time period without losing content desired by the user, etc. It is another object of the invention to provide a channel switching program, a computer program executed by a computer, for executing channel switching in the commercial time period without losing content desired by the user, etc.

To the end, according to the invention, there is provided a channel switching apparatus for receiving content provided by an information providing source and switching to a different channel when the commercial time period is entered, the channel switching apparatus comprising detection section for detecting attributes of the content and commercial being received; and switching control section for switching the reception channel to a different channel in the commercial time period, when the detection section detects attribute change from commercial to content on the former channel before being switched to the different channel after switching to the different channel, the switching control section for determining that the commercial time period end is reached and restoring the reception channel to the former channel.

To the end, according to the invention, there is provided a channel switching apparatus for receiving content provided by an information providing source and switching to a different channel when the commercial time period is entered, the channel switching apparatus comprising detection section for detecting attributes of the content and commercial being received; and switching control section for switching the reception channel to a different channel in the commercial time period, determining that when a predetermined time as the commercial time period elapses, the commercial time period end is reached, and restoring the reception channel to the former channel.

To the end, according to the invention, there is provided a channel switching method for receiving content provided by an information providing source and switching to a different channel when the commercial time period is entered, the channel switching method comprising a detection step of detecting attributes of the content and commercial being received; and a switching control step of switching the reception channel to a different channel in the commercial time period, when attribute change from commercial to content is detected in the detection step on the former channel before being switched to the different channel after switching to the different channel, the switching control step of determining that the commercial time period end is reached and restoring the reception channel to the former channel.

To the end, according to the invention, there is provided a channel switching method for receiving content provided by an information providing source and switching to a different channel when the commercial time period is entered, the channel switching method comprising a detection step of detecting attributes of the content and commercial being received; and a switching control step of switching the reception channel to a different channel in the commercial time period, determining that when a predetermined time as the commercial time period elapses, the commercial time period end is reached, and restoring the reception channel to the former channel.

According to the channel switching apparatus and the channel switching method of the invention, switching to a different channel is performed in the commercial time period and when the commercial time period end is reached, channel switching is performed to restore to the former channel.

The commercial time period end being reached is detected by detecting attribute change on the former channel before the channel switching is started, namely, attribute change from commercial to content on the former channel. The commercial time period end being reached is detected when the predetermined time as the commercial time period elapses.

Thus, while the commercial time period is entered on the former channel, switching to a different channel is performed and upon restoring to the content from the commercial on the former channel, receiving the content is continued, whereby the content is prevented from being lost.

To the end, according to the invention, there is provided a channel switching program for causing a computer to execute switching to a different channel when the commercial time period is entered while content provided by an information providing source is being received, the channel switching program comprising a detection step of detecting attributes of the content and commercial being received; and a switching control step of switching the reception channel to a different channel in the commercial time period, when attribute change from commercial to content is detected in the detection step on the former channel before being switched to the different channel after switching to the different channel, the switching control step of restoring the reception channel to the former channel.

To the end, according to the invention, there is provided a channel switching program for causing a computer to execute switching to a different channel when the commercial time period is entered while content provided by an information providing source is being received, the channel switching program comprising a detection step of detecting attributes of the content and commercial being received; and a switching control step of switching the reception channel to a different channel in the commercial time period, determining that when a predetermined time as the commercial time period elapses, the commercial time period end is reached, and restoring the reception channel to the former channel.

According to the channel switching program of the invention, a computer is caused to execute the program. Switching to a different channel is performed in the commercial time period and when the commercial time period end is reached, channel switching is performed to restore to the former channel.

The commercial time period end being reached is detected by detecting attribute change on the former channel before the channel switching is started, namely, attribute change from commercial to content on the former channel. The commercial time period end being reached is detected when the predetermined time as the commercial time period elapses.

Thus, while the commercial time period is entered on the former channel, switching to a different channel is performed and upon restoring to the content from the commercial on the former channel, receiving the content is continued, whereby the content is prevented from being lost.

### In the Drawings;

In the accompanying drawings:
FIG. 1 is a block diagram to show the configuration of a channel switching apparatus of an embodiment of the invention;
FIG. 2 is a flowchart to describe the operation of the channel switching apparatus shown in FIG. 1;
FIGS. 3A to 3C are time charts shown to describe the operation of the channel switching apparatus more clearly;
FIG. 4 is a time chart shown to describe the operation of the channel switching apparatus more clearly;
FIG. 5 is a time chart shown to describe the operation of the channel switching apparatus more clearly;
FIG. 6 is a time chart to describe the operation of a modification of the embodiment of the invention;
FIG. 7 is a flowchart to describe the operation of another modification of the embodiment of the invention; and
FIG. 8 is a time chart shown to describe problems of a channel switching apparatus in a related art.

Referring now to the accompanying drawings, there is shown a preferred embodiment of the invention. A channel switching apparatus contained in a television receiver for receiving digital multichannel television broadcasts distributed through a broadcast network from each broadcast station of an information providing source will be discussed as an embodiment of the invention.

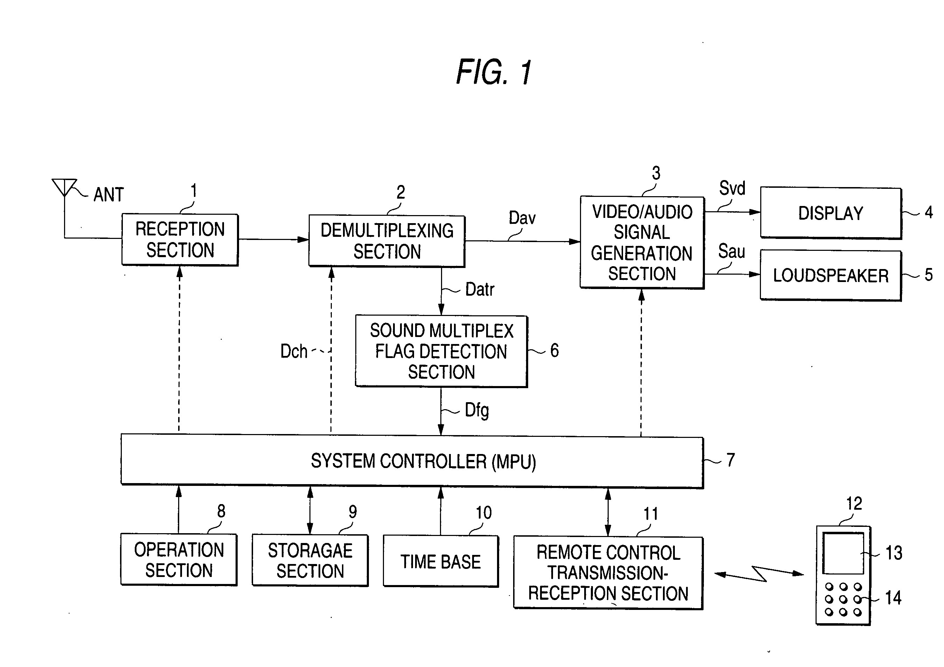

FIG. 1 is a block diagram to show the configuration of the channel switching apparatus contained in the configuration of the television receiver involving the channel switching apparatus.

In the figure, airwaves distributed from a broadcast station and coming from a ground station or a satellite are received at an antenna ANT and a reception section 1 RF-demodulates a high-frequency signal provided by receiving the airwaves, thereby converting into digital multichannel television data in a frequency band that can undergo signal processing, and supplies the digital multichannel television data to a demultiplexing section 2.

The demultiplexing section 2 separates the digital multichannel television data into video data and audio data, which will be hereinafter referred to as video audio data Dav and attribute data Datr indicating the broadcast attribute of stereo, mono, "bilingual" broadcast, etc., to output.

When channel set control data Dch is supplied from a system controller 7 (described later), the demultiplexing section 2 selects the broadcast station channel indicated by the channel set control data Dch and outputs the video audio data Dav and the attribute data Datr of the selected channel. [0027]

Although not shown, the demultiplexing section 2 extracts electronic program guide data from the digital multichannel television data and outputs the electronic program guide data to the system controller 7, which then edits the electronic program guide data and supplies the data to a video/audio signal generation section 3 (described later) for displaying the electronic program guide on a display 4.

The "electronic program guide data" is electronic program guide (EPG) data compliant with the digital multichannel television broadcast standard and distributed supplementary to the video audio data.

The "electronic program guide data" is made up of schedule information of broadcast programs scheduled to be distributed, such as the titles, the attribute, the broadcast schedule dates, the broadcast start and end times, the broadcast stations, and the categories of the programs, and details for introducing the contents of the programs.

Therefore, the system controller 7 edits the electronic program guide data supplied from the demultiplexing section 2 and supplies the data through the video/audio signal generation section 3 to the display 4 as described above, thereby providing the schedule of the programs scheduled to be distributed by each broadcast station for the user, etc., as video.

In addition to the video/audio signal generation section 3, a sound multiplex flag detection section 6 is connected to the demultiplexing section 2, and the display 4 and a loudspeaker 5 are connected to the video/audio signal generation section 3.

The channel switching apparatus further comprises the system controller 7 for performing centralized control of the operation of the television receiver comprising the channel switching apparatus. Connected to the system controller 7 are an operation section 8 for the user, etc., to perform any desired operation, a storage section 9 implemented as semiconductor memory, etc., a time base 10 for performing time counting, and a remote control transmission-reception section 11 for conducting two-way radio communications with a remote controller 12.

When the video audio data Dav is supplied from the demultiplexing section 2, the video/audio signal generation section 3 converts the video audio data Dav into a playback signal such as a composite signal and a digital video signal and supplies a video playback signal Svd of the playback signal to the display 4 for performing video playback and an audio playback signal Sau of the playback signal to the loudspeaker 5 for performing audio playback.

When the electronic program guide data is supplied from the system controller 7, the video/audio signal generation section 3 converts the electronic program guide data into a playback signal such as a composite signal and a digital video signal and supplies the playback signal to the display 4 for performing video playback of the electronic program guide.

The sound multiplex flag detection section 6 determines whether or not the attribute data Datr supplied from the demultiplexing section 2 contains the attribute data indicating a "bilingual" broadcast, which will be hereinafter referred to as "bilingual" flag data. If the "bilingual" flag data is detected, the sound multiplex flag detection section 6 generates a detection signal Dfg indicating that the current broadcast being received is a "bilingual" broadcast, and supplies the signal to the system controller 7; if the "bilingual" flag data is not detected, the sound multiplex flag detection section 6 generates a detection signal Dfg indicating that the current broadcast being received is not a "bilingual" broadcast, and supplies the signal to the system controller 7.

The system controller 7 comprises a microprocessor (MPU) for executing a preset computer program, thereby performing centralized control of the whole operation of the television receiver.

More particularly, the microprocessor (MPU) executes the preset computer program, thereby setting the frequency of a local signal for causing the reception section 1 to perform RF demodulation (frequency conversion), specifying the reception channel for the demultiplexing section 2, and inputting the detection signal Dfg from the sound multiplex flag detection section 6. Further, when the user, etc., enters a command through the operation section 8, the television receiver is controlled in response to the command. When the user, etc., enters a command through the remote controller 12 rather than the operation section 8, the command is input through the remote control transmission-reception section 11 and the operation of the television receiver is controlled in response to the command.

The operation section 8 is provided with a channel setting button switch for setting a reception channel and a switching preselection button switch for automatically changing the channel while commercials are broadcasted.

The remote controller 12 is alsoprovidedwith an operation section 14 comprising a channel setting button switch and a switching preselection button switch and further is provided with a display section 13 implemented as a liquid crystal display. Menu information, etc., sent by radio from the system controller 7 through the remote control transmission-reception section 11 is displayed on the display section 13.

The storage section 9 is provided for storing data required for performing control and operations when the system controller 7 controls the television receiver.

The time base 10, which comprises a high-precision crystal oscillator, etc., performs high-precision time counting operation and supplies the time count data to the system controller 7.

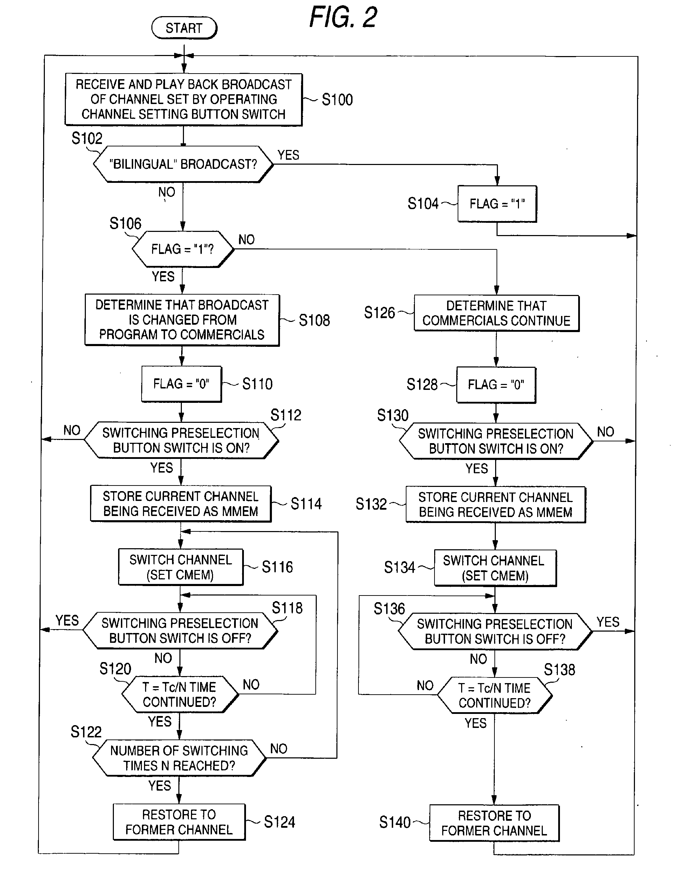

Next, the operation of the described embodiment will be discussed with reference to FIGS . 2 to 5. FIG. 2 is a flowchart to show the operation of the channel switching apparatus provided for the television receiver.

In FIG. 2, when the television receiver starts to operate with power on, at step S100, the system controller 7 controls the reception section 1 and the demultiplexing section 2 for receiving the broadcast of the channel set by operating the channel setting button switch of the operation section 8 or the remote controller 12. Accordingly, the video/audio signal generation section 3 generates a playback signal from the broadcast of the reception channel and supplies the playback signal to the display 4 and the loudspeaker 5.

Next, at step S102, the system controller 7 checks the detection signal Dfg output from the sound multiplex flag detection section 6 to determine whether or not a "bilingual" broadcast is being received. If the check result of the detection signal Dfg indicates that a "bilingual" broadcast is being received (YES at step S102), the system controller 7 goes to step S104 and sets flag data FLAG to "1." and stores the data in the storage section 9 and then causes the reception and playback processing at step S100 to continue. On the other hand, if the check result of the detection signal Dfg indicates that any other broadcast than a "bilingual" broadcast is being received (NO at step S102), the system controller 7 goes to step S106.

At step S106, the system controller 7 checks the most recent flag data FLAG stored in the storage section 9 to see if FLAG is set to "1." If the most recent flag data FLAG is set to "1" (YES at step S106), the system controller 7 goes to step S108 and determines that the broadcast of the channel being received is changed from "program" to "commercials." If the most recent flag data FLAG is set to "0" (NO at step S106), the system controller 7 goes to step S126 and determines that the broadcast of the channel being received remains in "commercials."

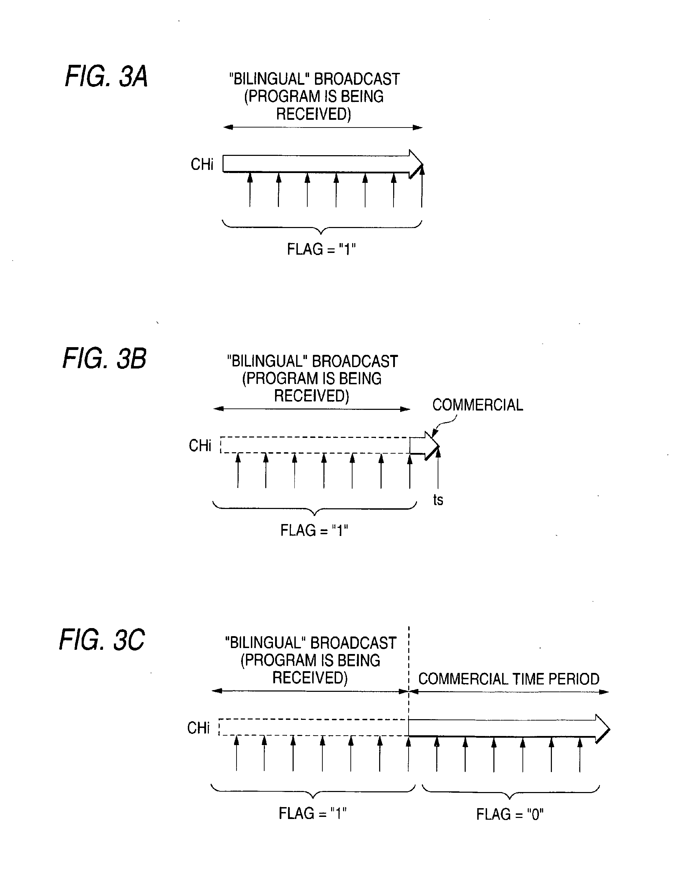

That is, the following processing is performed at steps S100 to S106: To begin with, as shown in a time chart of FIG. 3A, when a "bilingual" broadcast is continuously received during reception of one channel CHi, the loop of steps S100, S102, and S104 is repeated, whereby the program is received and played back and further the flag data FLAG is set to "1."

As shown in FIG. 3B, when the broadcast is changed from the "bilingual" broadcast to any other broadcast than the "bilingual" broadcast at one time point ts after the state in which the "bilingual" broadcast is continuously received, it is determined at step S108 that the broadcast is changed from "program" to "commercials." If the most recent flag data FLAG is "1" at the time point ts at which it is determined that the broadcast is any other broadcast than the "bilingual" broadcast at step S102, S106, it is determined that the broadcast is changed from "program" to "commercials."

As shown in FIG. 3C, ifthe commercial time period continues, the system controller 7 determines at step S102 that any other broadcast than the "bilingual" broadcast is being received, and determines at step S106 that the flag data FLAG is "0," thereby determining that commercials are continuing.

When the flag data FLAG is set to "0" at step S110 or S128 (described later) and further a process sequence (described later) is performed and then the system controller 7 again executes step S106, the system controller 7 determines that the flag data FLAG is "0."

Next, it is determined at step S108 that the broadcast is changed from "program" to "commercials," the flag data FLAG is set to "0" at step S110. This means that the flag data FLAG is set to "0" based on the result of determining that the broadcast is any other broadcast than the "bilingual" broadcast at step S102.

Next, at step S112, the system controller 7 checks whether or not the switching preselection button switch is set to ON. This means that the user, etc., can switch the switching preselection button switch between ON and OFF at any time. If the switching preselection button switch is OFF, it is determined that an instruction to view not only programs, but also commercials is given, and the process starting at step S100 is continued. On the other hand, if the switching preselection button switch is ON, the system controller 7 goes to step S114 and stores former channel data MMEM indicating the current channel being received in a predetermined area of the storage section 9 for management.

Next, at step S116, the system controller 7 instructs the reception section 1 and the demultiplexing section 2 to switch the current channel to any other channel.

The time to receive any other channel to which the current channel is switched, which will be hereinafter referred to as reception continuation time, is determined as follows : Letting the commercial time period be Tc and the number of other channels to switch to within the commercial time period Tc be n, the time period Tc is divided by the number of channels n to find reception continuation time T (=Tc/n).

Further, the user, etc., can set the commercial time period Tc to any desired time period by manually operating a predetermined operation button switch of the operation section 8 or the remote controller 12 and further can previously specify one or more channels by manually operating a predetermined operation button switch of the operation section 8 or the remote controller 12. If the user, etc., does not specify the commercial time period Tc or any channel by manual operation, the reception continuation time T (=Tc/n) is determined based on the general commercial time period Tc and the number of channels that can be received, n.

Therefore, the user, etc., can set any desired reception continuation time T regardless of whether or not the user, etc., performs manual operation.

A specific example is described as follows: To being with, if the user, etc., specifies neither the time period Tc nor channels, the system controller 7 automatically divides the general commercial broadcast time period Tc by the number of channels that can be received, n, and determines that the found time Tc/n is the reception continuation time T. In the embodiment, the general commercial broadcast time period Tc is determined 15 seconds and the standard reception continuation time T is 15 seconds/n.

If the user, etc., specifies the time period Tc and does not specify any channel to switch to, the system controller 7 divides the time period Tc specified by the user, etc., by the number of channels that can be received, n, and determines that the found time Tc/n is the reception continuation time T.

If the user; etc., does not specify the time period Tc and specifies n channels to switch to, the system controller 7 divides the general commercial broadcast time period Tc by the number of channels n specified by the user, etc., and determines that the found time Tc/n is the reception continuation time T.

If the user, etc., specifies the time period Tc and n channels to switch to, the system controller 7 divides the time period Tc specified by the user, etc., by the number of channels n specified by the user, etc., and determines that the found time Tc/n is the reception continuation time T.

When the system controller 7 thus determines the reception continuation time T, it stores switch-to channel data CMEM indicating the channels to switch to (the channels that can be received or the channels specified by the user, etc.,) in a predetermined area of the storage section 9 for management.

Next, at step S118, the system controller 7 checks whether or not the switching preselection button switch is switched to OFF. If the switching preselection button switch is not switched to OFF, the system controller 7 goes to step S120; if the switching preselection button switch is switched to OFF, the system controller 7 goes to the process starting at step S100 with the channel to switch to maintained as the reception channel.

That is, if the user, etc., switches the switching preselection button switch to OFF during channel switching, the system controller 7 clears the former channel data MMEM and further goes to step S100 while holing the current channel being received, set based on the switch-to channel data CMEM.

Accordingly, if the user, etc., wants to continue viewing the broadcast of the channel to switch to, the user, etc., can view the broadcast of the channel to switch to by setting the switching preselection button switch to OFF; the convenience of the user, etc., is improved.

If the switching preselection button switch remains ON, at step S120, the system controller 7 checks the actual reception continuation time based on the time count data of the time base 10. If the system controller 7 determines that the reception continuation time reaches the time of Tc/n, the system controller 7 goes to step S122; if the reception continuation time does not yet reach the time of Tc/n, the process starting at step S118 is repeated.

At step S118, the system controller 7 determines whether or not channel switching every reception continuation time T (=Tc/n) is performed for all n channels. If the number of switching times does not reachn, the system controller 7 repeats the process starting at step S116. If the number of switching times reaches n, the system controller 7 goes to step S124.

At step S124, the system controller 7 instructs the reception section. 1 and the demultiplexing section 2 to switch the channel to the former reception channel based on the former channel data MMEM, and goes to the process starting at step S100.

Thus, as steps S112 to S124 are executed, while commercials are broadcasted on the former reception channel, the broadcast of any other channel is received and played back. Thus, for example, when the program being viewed changes to commercials, it is made possible to meet the demand for the user, etc., to see the match or game progress of any desired "sports" program broadcasted on another channel.

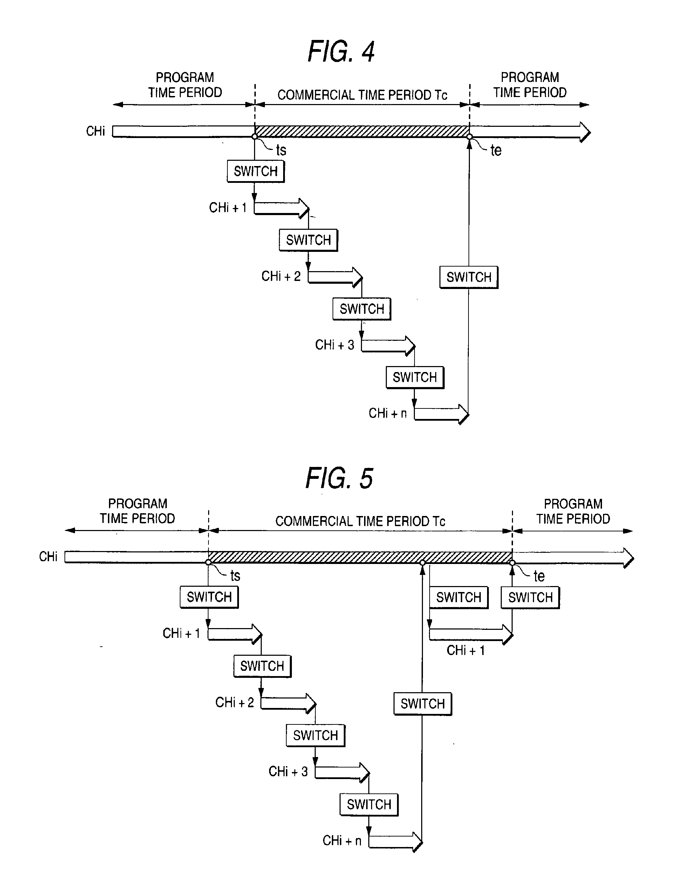

Further, as shown in a time chart of FIG. 4, if switching to another channel is performed within the general commercial broadcast time period Tc, switching is performed to the n channels CHi+1 to CHi+n that can be received or the n channels CHi+1 to CHi+n previously specified by the user, etc., and thus the reception channel can be restored to the former channel CHi matching time point te at which the former channel CHi returns to the program from commercials.

Therefore, the problem for the user, etc., to fail to see a part of the desired program can be solved and it is made possible to improve the convenience of the user, etc. As described above, if the user, etc., sets the switching preselection button switch to OFF, he or she can continue to see the channel to switch to and thus the convenience of the user, etc., can also be improved in this point.

If the user, etc., sets any desired time period Tc rather than the general commercial broadcast time period Tc, there is a possibility that it may be made impossible to restore the reception channel to the former channel CHi matching the time point te at which the former channel CHi returns to the program from commercials as shown in FIG. 4. However, in such a case, processing of heeding the will of the user, etc., is performed and the selection width of operation of the user, etc., can be widened.

Next, the operation if the process goes to step S126 from step S106 will be discussed. To begin with, at step S126, it is determined that commercials continue as described above. That is, when the channel is restored to the former reception channel CHi at step S124, if the commercial time period is still continued in the broadcast of the former channel CHi as shown in a time chart of FIG. 5, the determination at step S126 is made.

For example, if the commercial broadcast time is prolonged for some reason of the broadcast station or if the time period Tc manually set by the user, etc., is comparatively short, the commercial time period may be still continued in the broadcast of the former channel, in which case the determination at step S126 is made.

Next, at step S128, the flag data FLAG is set to "0." This means that the flag data FLAG is set to "0" based on the result of determining at step S102 that the broadcast is any other broadcast than "bilingual".

Next, at step S130, the system controller 7 determines whether or not the switching preselection button switch is set to ON. If the switching preselection button switch is OFF, it is determined that an instruction to view not only programs, but also commercials is given, and the process starting at step S100 is continued. On the other hand, if the switching preselection button switch is ON, the system controller 7 goes to step S132 and stores former channel data MMEM indicating the current channel being received in the predetermined area of the storage section 9 for management.

Next, at step S134, the system controller 7 instructs the reception section 1 and the demultiplexing section 2 to switch the current channel to a different channel. Here, the above-described time period Tc/n is determined the reception continuation time T of the different channel. Further, the system controller 7 stores switch-to channel data CMEM indicating the channels to switch to in the predetermined area of the storage section 9 for management.

Next, at step S136, the system controller 7 checks whether or not the switching preselection button switch is switched from ON to OFF. If the switching preselection button switch is not switched to OFF, the system controller 7 goes to step S138; if the switching preselection button switch is switched to OFF, the system controller 7 goes to the process starting at step S100 with the channel to switch to maintained on the reception channel.

That is, if the user, etc., switches the switching preselection button switch from ON to OFF during channel switching, the system controller 7 clears the former channel data MMEM and further goes to step S100 while holding the current channel being received corresponding to the switch-to channel data CMEM.

Accordingly, if the user, etc., wants to continue viewing the broadcast of the channel to switch to, the user, etc., can view the broadcast of the channel to switch to by setting the switching preselection button switch to OFF; the convenience of the user, etc., is improved.

If the switching preselection button switch remains ON, at step S138, the system controller 7 checks the actual reception continuation time based on the time count data of the time base 10. If the system controller 7 determines that the reception continuation time reaches the time of Tc/n, the system controller 7 goes to step S140; if the reception continuation time does not yet reach the time of Tc/n, the process starting at step S136 is repeated.

If the actual reception continuation time reaches the time of Tc/n, at step S140, the system controller 7 instructs- the reception section 1 and the demultiplexing section 2 to switch the channel to the former reception channel based on the former channel data MMEM, and goes to the process starting at step S100.

That is, after the process at step S136, S138 is executed only in one reception continuation time T (=Tc/n), the channel is restored to the former reception channel and the system controller 7 goes to the process starting at step S100.

When the channel is restored to the former reception channel, if the commercial time period is still continued, the system controller 7 again goes to step S126 from step S106 and performs channel switching processing only in one reception continuation time T (=Tc/n).

When the broadcast returns from the commercials to the program, the loop of steps S100, S102, and S104 is repeated, and the former program viewed by the user, etc., is received and played back.

As described above, according to the embodiment, the commercial start time point is detected automatically and the reception channel is switched to any other channel within the predetermined time period Tc, so that the broadcast contents of any other channel can be shown for the user, etc.

Further, the time period Tc is set matching the commercial broadcast time, whereby if switching to any other channel is performed during the commercial time period, the problem for the user, etc., to fail to see a part of the former program can be solved.

When the reception channel is restored to the former channel, if the commercial time period is still continued on the former channel, switching to any other channel and restoring to the former channel are performed alternately, whereby the commercial end time point can be determined with high accuracy. Thus, if the commercial time length is changed for some reason of the broadcast station, restoring to the former channel can be performed appropriately and excellent convenience of the user, etc., can be provided.

The user, etc., can set the switching preselection button switch to ON or OFF at any time. Thus, for example, when the user, etc., views a program on one channel CHi with the switching preselection button switch OFF and the program is changed to commercials, if the user, etc., sets the switching preselection button switch to ON at the time point at which the program is changed to commercials, the user, etc., can give a command for switching to any other channel during the commercial time period. This means that processing similar to the processing previously described with reference to the flowchart of FIG. 2 can be performed.

Therefore, if the user, etc., presets the switching preselection button switch to ON and views any desired program, when commercials are broadcasted during the program, automatic switching to any other channel can be performed. When the user, etc., views any desired program with the switching preselection button switch preset to OFF and the program is changed to commercials, if the user, etc., sets the switching preselection button switch to ON, switching to any other channel can also be performed.

Thus, when the user, etc., selects any desired channel, he or she can obtain an excellent operation feeling.

In the embodiment, only one tuner system is provided for receiving arrival airwaves, selecting any desired channel, and generating audio and video playback signals as shown by the reception section 1 and the demultiplexing section 2 in FIG. 1 and performs processing for normal playback and switching to any other channel during commercials (switching for traveling to other channels). Therefore, the advantage that it is not necessary to provide a separate dedicated tuner system for detecting commercials, etc., is provided.

In the embodiment, if the user, etc., does not specify any time period, the commercial time period Tc is assumed to be the general commercial time (15 seconds). However, the invention is not limited to the mode. That is, in the embodiment, the general commercial time (15 seconds) is adopted to eliminate the case where the commercial time period is continued on the former channel upon restoration to the former channel, but the commercial time period Tc may be set to a shorter time than the general commercial time (15 seconds) . In this case, a part of a commercial (portion close to the end) can be received upon: restoration to the former channel, but it is made possible to drastically reduce occurrences of the problem for the user, etc., to fail to see a part of the desired program.

In the embodiment, as shown in the process at step S106 and steps S126 to S140 in FIG. 2 and schematically in FIG. 5, if the commercial time period is still continued on the former channel upon restoration to the former channel after one traveling switching to other channels is performed in the commercial time period, another traveling switching to other channels is started and at this time, whenever the channel is switched to another channel, restoring to the former channel is performed and the traveling switching is repeated while the commercial end is checked.

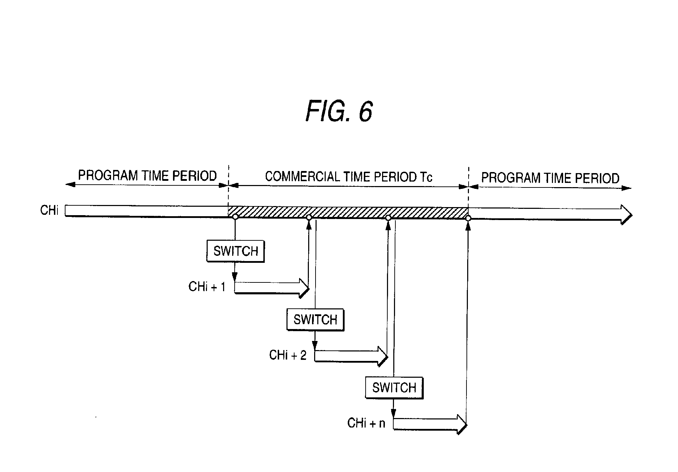

However, the following traveling switching may be performed as a modification of the embodiment: In the above-described traveling switching method, switching to other channels is consecutively performed at the first traveling switching and thus processing of restoring to the former channel whenever switching to another channel is performed is not performed and at the second or later traveling switching, processing of restoring to the former channel whenever switching to another channel is performed is performed, but processing of restoring to the former channel whenever switching to another channel is performed may be performed at the first traveling switching as shown schematically in FIG. 6.

According to the modification, whenever switching to another channel is performed, restoring to the former channel is performed and whether or not the commercial end is reached is checked and if the commercial end is reached, processing is continued to play back the content of the program, etc., on the former channel. Thus, it is made possible to detect the commercial end time point with higher accuracy and the user, etc., can be more reliably prevented from failing to see a part of the content of the program, etc.

As another modification, traveling switching to other channels is consecutively performed at the first traveling switching and if the commercial time period is still continued on the former channel, traveling switching to other channels may be consecutively performed at the second or later traveling switching as at the first traveling switching. This means that processing of restoring to the former channel and checking whether or not the commercial end is reached whenever switching to another channel is performed is not performed.

According to the modification, since the normal commercial time period is set to a time of an integral multiple of 15 seconds, a problem for the user, etc., to fail to see a part of the program, etc., scarcely occurs if processing of restoring to the former channel and checking whether or not the commercial end is reached whenever switching to another channel is performed is not performed.

Further, in the embodiment, as shown in the flowchart of FIG. 2, when reception is started at step S100, whether or not the broadcast is "bilingual" is always determined at step S102 and when the switching preselection button switch is set to ON at step S112, channel switching is performed. That is, whether or not the broadcast is "bilingual" is previously determined, thereby checking whether or not the commercial time period is entered, and if the switching preselection button switch is set to ON when it is already checked that a commercial is being received, traveling switching to other channels is performed.

However, the invention is not limited to the mode. After the switching preselection button switch is first set to ON, whether or not the broadcast is "bilingual" is checked and if the commercial time period is entered, traveling switching to other channels may be performed. That is, without determining whether or not the broadcast is "bilingual" whenever reception is started, whether or not the broadcast is "bilingual" may be determined and whether or not channel switching is to be performed may be determined provided that the switching preselection button switch is set to ON.

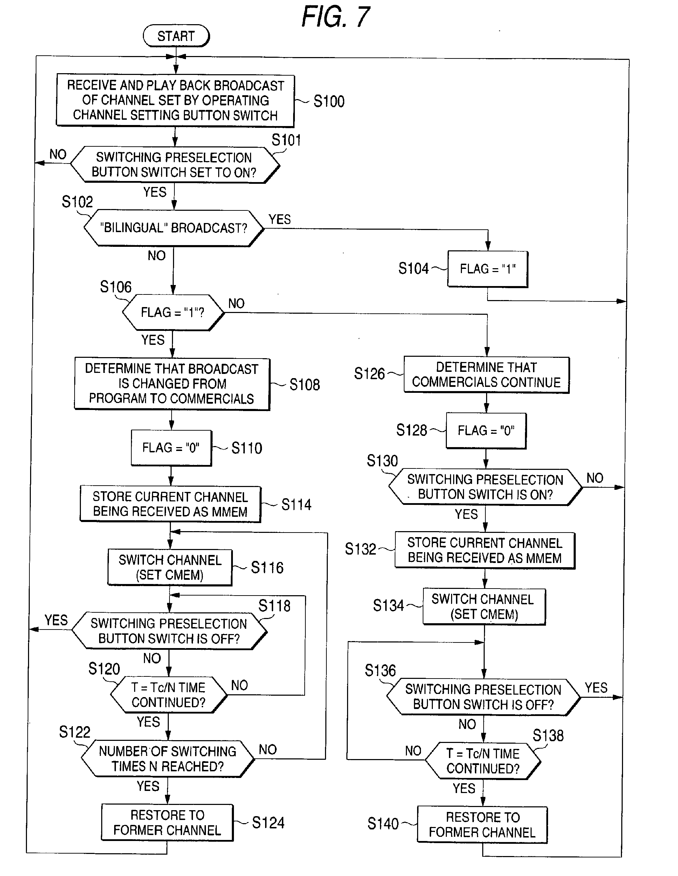

A flowchart of FIG. 7 shows the operation of a modification wherein whether or not the broadcast is "bilingual" is determined and whether or not channel switching is to be performed is determined provided that the switching preselection button switch is set to ON. Steps identical with or similar to those previously described with reference to FIG. 2 are denoted by the same step numbers in FIG. 7.

In FIG. 7, step S112 in FIG. 2 is deleted and instead, step S101 corresponding to step S112 is added. According to the flow, after reception is started at step S100 in FIG. 7, whether or not the switching preselection button switch is set to ON is determined at step S101 and if the switching preselection button switch is OFF, the reception at step S100 is continued. However, whether or not the broadcast is "bilingual" is not determined while the reception is continued at step S100.

When the switching preselection button switch is set to ON, control goes to the process starting at step S102 and if the broadcast is any other broadcast than "bilingual," it is determined that a commercial is beingbroadcasted, and traveling switching to other channels is performed.

Further, when the switching preselection button switch is set to ON, automatic checking as to whether or not traveling switching is to be performed is conducted and processing to meet the request made by the user, etc., is performed until the switching preselection button switch is set to OFF. Thus, if the operation shown in the flowchart of FIG. 7 is performed, traveling switching during the commercial time period, desired by the user, etc., can also be performed.

In the flowchart of FIG. 7, although whether or not the broadcast is "bilingual," namely, the commercial time period is entered is not determined until the switching preselection button switch is set to ON, whenever the switching preselection button switch is set to ON, whether or not the broadcast is "bilingual" is determined and if the commercial time period is entered, traveling switching to other channels is performed. In contrast, if the switching preselection button switch is first or newly set to ON with the switch set to OFF, in other words, if the switching preselection button switch is first set to ON, the first traveling switching to other channels is performed without determining whether or not the broadcast is "bilingual" and if the switching preselection button switch remains set to ON still after the first traveling switching terminates, automatic checking as to whether or not traveling switching is to be performed may be conducted while whether or not the broadcast is "bilingual" is automatically determined.

In the embodiment, the microprocessor (MPU) contained in the system controller 7 executes the preset computer program, thereby controlling switching to other channels during the commercial time period.

However, the invention is not limited to the mode. The computer program for controlling switching to other channels during the commercial time period is an independent channel switching program and this channel switching program may be distributed through a communication network of the Internet, etc., to a television receiver comprising a communication function, whereby the channel switching program is downloaded into the system controller 7 or a storage medium such as a CD or a DVD recording the channel switching program may be provided for the user, etc., for loading the storage medium into a television receiver comprising a player for playing back the record information on the storage medium and installing the channel switching program in the system controller 7.

The channel switching program may be executed in a personal computer. As the channel switching program is thus provided through the Internet or a storage medium, it is made possible to cause a personal computer comprising a so-calledvideo capture board, etc., containing a reception tuner that can receive television or radio broadcasts to execute the channel switching function previously described, and the channel switching function can be provided for a wide range of users, etc.

In the embodiment, the case where the digital multichannel television broadcast distributed by ground waves or satellite waves is used as content is described, but the invention is not limited to the mode. If commercials are contained in content supplied through a communication network of a CATV, the Internet, etc., the invention can also be applied widely to the case where switching to the content on any other channel is performed in the commercial time period.

In the embodiment, the sound multiplex flag is used to detect switching between content and a commercial, but the invention is not limited to the mode. For example, the information providing source of a broadcast station, etc., may superpose commercial identification information to identify commercials on the vertical blanking interval (VBI) of a video signal, so that when the distributed video signal is played back, the channel switching apparatus may check the commercial identification information to detect a commercial.

The information providing source of a broadcast station, etc., may embed special commercial identification information in a video signal or image data for distribution, so that when the image is played back, the channel switching apparatus may check the commercial identification information to detect a commercial.

As described above, according to the channel switching apparatus and the channel switching method of the invention, the attribute difference between content and commercial is detected and switching to a different channel is performed in the commercial time period and whether or not the commercial time period end is reached is determined based on the attribute during the commercial time period on the former channel when the channel switching is started. Thus, upon restoring to the former channel after the commercial time period end is reached, the content can be prevented from being lost.

According to the channel switching program of the invention, the attribute difference between content and commercial is detected and switching to a different channel is performed in the commercial time period and whether or not the commercial time period end is reached is determined based on the attribute during the commercial time period on the former channel when the channel switching is started. Thus, upon restoring to the former channel after the commercial time period end is reached, the content can be prevented from being lost. The channel switching program enables a wide range of electronic machines such as a personal computer comprising a computer to be provided with the channel switching function.

## Claims

1. A channel switching apparatus for receiving content provided by an information providing source and switching to a different channel when a commercial time period is entered,
said channel switching apparatus comprising:
detection section for detecting attributes of the content and commercial being received; and
switching control section for switching the reception channel to a different channel in the commercial time period, when said detection section detects attribute change from commercial to content on the former channel before being switched to the different channel after switching to the different channel, said switching control section for determining that the commercial time period end is reached and restoring the reception channel to the former channel.

2. A channel switching apparatus for receiving content provided by an information providing source and switching to a different channel when a commercial time period is entered,
said channel switching apparatus comprising:
detection section for detecting attributes of the content and commercial being received; and
switching control section for switching the reception channel to a different channel in the commercial time period, determining that when a predetermined time as the commercial time period elapses, the commercial time period end is reached, and restoring the reception channel to the former channel.

3. The channel switching apparatus as claimed in claim 1, wherein
said switching control section switches as many channels as the number of channels capable to be received in the commercial time period.

4. The channel switching apparatus as claimed in claim 1, wherein
said switching control section comprises operation section for inputting externally manipulated information, and performs channel switching to the channel specified through said operation section in the commercial time period.

5. The channel switching apparatus as claimed in claim 1, wherein
when said detection section detects attribute change from content to commercial, said switching control section starts processing of switching the reception channel to a different channel in the commercial time period.

6. The channel switching apparatus as claimed in claim 2, wherein
said switching control section switches as many channels as the number of channels capable to be received in the commercial time period.

7. The channel switching apparatus as claimed in claim 2, wherein
said switching control section comprises operation section for inputting externally manipulated information, and performs channel switching to the channel specified through said operation section in the commercial time period.

8. The channel switching apparatus as claimed in claim 2, wherein
when said detection section detects attribute change from content to commercial, said switching control section starts processing of switching the reception channel to a different channel in the commercial time period.

9. A channel switching method for receiving content provided by an information providing source and switching to a different channel when a commercial time period is entered,
said channel switching method comprising:
a detection step of detecting attributes of the content and commercial being received; and
a switching control step of switching the reception channel to a different channel in the commercial time period, when attribute change from commercial to content is detected in said detection step on the former channel before being switched to the different channel after switching to the different channel, said switching control step of determining that the commercial time period end is reached and restoring the reception channel to the former channel.

10. A channel switching method for receiving content provided by an information providing source and switching to a different channel when a commercial time period is entered,
said channel switching method comprising:
a detection step of detecting attributes of the content and commercial being received; and
a switching control step of switching the reception channel to a different channel in the commercial time period, determining that when a predetermined time as the commercial time period elapses, the commercial time period end is reached, and restoring the reception channel to the former channel.

11. The channel switching method as claimed in claim 9, wherein
said switching control step is to switch as many channels as the number of channels capable to be received in the commercial time period.

12. The channel switching method as claimed in claim 9, wherein
said switching control step is to perform channel switching to the externally specified channel in the commercial time period.

13. The channel switching method as claimed in claim 9, wherein
when attribute change from content to commercial is detected in said detection step, said switching control step starts processing of switching the reception channel to a different channel in the commercial time period.

14. The channel switching method as claimed in claim 10, wherein
said switching control step is to switch as many channels as the number of channels capable to be received in the commercial time period.

15. The channel.switching method as claimed in claim 10, wherein
said switching control step is to perform channel switching to the externally specified channel in the commercial time period.

16. The channel switching method as claimed in claim 10, wherein
when attribute change from content to commercial is detected in said detection step, said switching control step starts processing of switching the reception channel to a different channel in the commercial time period.

17. A channel switching program for causing a computer to execute switching to a different channel when a commercial time period is entered while content provided by an information providing source is being received,
said channel switching program comprising:
a detection step of detecting attributes of the content and commercial being received; and
a switching control step of switching the reception channel to a different channel in the commercial time period, when attribute change from commercial to content is detected in the detection step on the former channel before being switched to the different channel after switching to the different channel, the switching control step of restoring the reception channel to the former channel.

18. A channel switching program for causing a computer to execute switching to a different channel when a commercial time period is entered while content provided by an information providing source is being received,
said channel switching program comprising:
a detection step of detecting attributes of the content and commercial being received; and
a switching control step of switching the reception channel to a different channel in the commercial time period, determining that when a predetermined time as the commercial time period elapses, the commercial time period end is reached, and restoring the reception channel to the former channel.

19. The channel switching program as claimed in claim 17, wherein
the switching control step is to switch as many channels as the number of channels capable to be received in the commercial time period.

20. The channel switching program as claimed in claim 17, wherein
the switching control step is to perform channel switching to the externally specified channel in the commercial time period.

21. The channel switching program as claimed in claim 17, wherein
when attribute change from content to commercial is detected in the detection step, the switching control step starts processing of switching the reception channel to a different channel in the commercial time period.

22. The channel switching program as claimed in claim 18, wherein
the switching control step is to switch as many channels as the number of channels capable to be received in the commercial time period.

23. The channel switching program as claimed in claim 18, wherein
the switching control step is to perform channel switching to the externally specified channel in the commercial time period.

24. The channel switching program as claimed in claim 18, wherein
when attribute change from content to commercial is detected in the detection step, the switching control step starts processing of switching the reception channel to a different channel in the commercial time period.
